(19) Europäisches Patentamt
European Patent Office
Office européen des brevets

(11) Numéro de publication: **0 390 677 B1**

# (12) FASCICULE DE BREVET EUROPEEN

(45) Date de publication du fascicule du brevet: **06.09.95**

(51) Int. Cl.[6]: **C01G 53/00**, H01M 4/52

(21) Numéro de dépôt: **90400841.4**

(22) Date de dépôt: **28.03.90**

## (54) Procédé de préparation d'un hydroxyde de nickel substitué au cobalt de structure alpha, stable en milieu alcalin et son utilisation dans un générateur électrochimique.

(30) Priorité: **29.03.89 FR 8904062**

(43) Date de publication de la demande:
**03.10.90 Bulletin 90/40**

(45) Mention de la délivrance du brevet:
**06.09.95 Bulletin 95/36**

(84) Etats contractants désignés:
**AT BE CH DE DK ES FR GB GR IT LI LU NL SE**

(56) Documents cités:
**EP-A- 0 204 239**
**GB-A- 2 082 561**
**US-A- 3 928 068**

**JOURNAL OF APPLIED ELECTROCHEMISTRY, vol. 18, 1988, pages 215-219, Chapman and Hall Ltd; R.D. ARMSTRONG et al.: "Some effects of the addition of cobalt to the nickel hydroxide electrode"**

**CHEMICAL ABSTRACTS, vol. 79, no. 10, 10 septembre 1973, page 541, résumé no. 60882e, Columbus, Ohio, US; & SU-A-376 837 (A.M. NOVAKOVSKII et al.) 05-04-1973**

(73) Titulaire: **CENTRE NATIONAL D'ETUDES SPATIALES**
**2, Place Maurice Ouentin**
**F-75001 Paris (FR)**

(72) Inventeur: **Willmann, Patrick**
**5 Chemin de Pinatel**
**F-31450 Montgiscard (FR)**
Inventeur: **Delmas, Claude**
**Résidence Bois D'Arcy,**
**A 231**
**F-33400 Talence (FR)**
Inventeur: **Faure, Christiane**
**Avenue Lafontaine**
**F-33560 Carbon-Blanc (FR)**
Inventeur: **Borthomieu, Yannick**
**134 Cours de L'Yser**
**F-33000 Bordeaux (FR)**

(74) Mandataire: **Des Termes, Monique et al**
**Société Brevatome**
**25, rue de Ponthieu**
**F-75008 Paris (FR)**

**EP 0 390 677 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**CHEMICAL ABSTRACTS**, vol. 80, no. 22, 3 juin 1974, page 121, résumé no. 122857g, Columbus, Ohio, US; A.D. TOLSTOGUZOV et al.: "Use of ozone in the production of nickel salts", & TSVET. METAL. 1973, (10), 25

**SOLID STATE IONICS**, vol. 28-30, 1988, pages 1132-1137, Elsevier Science Publishers B.V., North-Holland, Amsterdam, NL; C. DELMAS et al.: "From sodium nickelate to nickel hydroxide"

**CHIMIA**, vol. 24, mars 1970, pages 99-108; R. ALLMANN: "Doppelschichtstrukturen mit brucitähnlichen Schichtionen [Me(II)1-xMe(III)x(OH)2]x+ "

**PATENT ABSTRACTS OF JAPAN**, vol. 8, no. 229 (E-273)[1666], 20 octobre 1984; & JP-A-59 111 264 (NIHON DENCHI K.K.) 27-06-1984

## Description

La présente invention a pour objet un procédé de préparation d'un hydroxyde de nickel substitué au cobalt, utilisable comme matériau d'électrode positive dans des batteries au nickel.

De façon plus précise, elle concerne la préparation d'hydroxyde de nickel substitué au cobalt permettant un cyclage électrochimique entre les variétés alpha et gamma des hydroxydes et oxyhydroxydes de nickel.

Depuis quelques années, on a beaucoup développé les générateurs électrochimiques alcalins du type Ni-Cd, Ni-Zn, Ni-fe et Ni-$H_2$ pour des applications de grand public industrielles, militaires ou spatiales. Dans ces générateurs électrochimiques, on utilise des électrodes de nickel formées d'hydroxyde de nickel qui sont cyclées électrochimiquement entre les variétés bêta (II), ce qui correspond à $Ni(OH)_2$, et bêta (III), ce qui correspond à NiOOH.

Pour améliorer les propriétés d'électrodes en hydroxyde de nickel, on a envisagé de leur ajouter du cobalt afin de former un film d'hydroxyde de cobalt et de nickel de structure $\alpha$ que l'on convertit ensuite en structure $\beta$, comme il est décrit par Armstrong et al dans Journal of Applied Electrochemistry, 18, 1988, p. 215-219.

Toutefois, le cyclage électrochimique entre les deux variétés $\beta$(II) et $\beta$(III) ne peut mettre en jeu qu'un seul électron en théorie. Expérimentalement, le cyclage entre ces deux variétés ne permet généralement que l'échange de 0,8 e- environ.

Par ailleurs, avec ce système, on a certains phénomènes de gonflement de l'électrode lors du cyclage électrochimique, et les contraintes mécaniques résultant de ce gonflement limitent la durée de vie du générateur. Ce gonflement résulte d'une réaction parasite correspondant à la transformation de la structure $\beta$(III) en structure $\gamma$ qui se produit lors de la surcharge de l'électrode.

Aussi, si l'on veut améliorer les caractéristiques des électrodes de nickel, il serait souhaitable d'effectuer le cyclage électrochimique entre d'autres variétés d'hydroxydes de nickel pour mettre en jeu plus d'un électron et éviter ces problèmes de gonflement.

Parmi les possibilités envisageables, on sait que le cyclage électrochimique entre la variété alpha, c'est-à-dire l'hydroxyde hydraté alpha $Ni(OH)_2$, $mH_2O$ et la variété gamma, soit l'oxyhydroxyde hydraté gamma, NiOOH ,$kH_2O$ peut mettre en jeu plus d'un électron car le degré d'oxydation du nickel est égal à 2 dans l'hydroxyde alpha et il est compris entre 3,3 et 3,7 dans l'oxyhydroxyde hydraté gamma.

La réalisation d'une électrode en nickel capable d'être cyclée électrochimiquement entre ces deux variétés serait donc particulièrement intéressante pour améliorer les performances des générateurs électrochimiques existants.

En effet, bien que le système $\alpha$ /$\gamma$ ait un potentiel légèrement inférieur (de 50mV environ à celui du système $\beta$(II)/$\beta$(III)), la quantité de courant transféré doit être nettement supérieure (1,2 électron échangé au lieu de 0,8). De plus, lorsqu'on utilise le système $\beta$(II)/$\beta$(III), il se forme toujours lors du cyclage une certaine quantité de phase $\gamma$ et des problèmes mécaniques dûs au gonflement de l'électrode apparaissent. Dans le système $\alpha$/$\gamma$, les variations de distance intercouche sont plus réduites, et l'on devrait obtenir une diminution sensible du gonflement.

Cependant, jusqu'à présent, il a été impossible de réaliser un générateur électrochimique fonctionnant selon ce principe car l'hydroxyde de nickel alpha est instable et lorsqu'on l'utilise dans un générateur électrochimique, le système alpha/gamma se transforme rapidement et irréversiblement en système bêta (II) / bêta (III).

C. Delmas et al dans Solid State Ionics, 28-30, 1988, p. 1132-1137 ont montré qu'il était possible de stabiliser la structure alpha de l'hydroxyde de nickel (II) en le substituant par du cobalt (III). Cet hydroxyde substitué peut être obtenu de la façon suivante : on forme par synthèse directe une solution solide $NaCo_xNi_{1-x}O_2$ en portant à une température de 800°C, sous atmosphère d'oxygène, un mélange de $Na_2O$, $Co_3O_4$ et NiO, puis on hydrolyse la solution solide en milieu basique oxydant pour obtenir l'oxyhydroxyde hydraté de structure gamma, et on soumet cet oxyhydroxyde hydraté à une réduction par une solution d'eau oxygénée ou de sulfite de sodium, pour former l'hydroxyde de nickel substitué par le cobalt de structure alpha, comme il est décrit egalement aux pages 87-91 de la Thèse n° 787 présentée à l'Université de Bordeaux I par J.J.Braconnier, le 22 décembre 1983 : "Sur les oxydes lamellaires alcalins $A_xMO_2$ : intercalation et échange du sodium, application à l'étude de l'électrode positive du générateur cadmium-nickel".

Ce procédé de fabrication d'une électrode en nickel de structure alpha est difficile à mettre en oeuvre à l'échelle industrielle en raison des températures élevées qui sont exigées dans la première étape.

Aussi, il serait préférable de disposer d'un procédé de fabrication d'électrodes de ce type, qui puisse être mis en oeuvre à la température ambiante. Cependant, la substitution de cobalt (III) au nickel dans

l'hydroxyde de nickel pose certains problèmes si l'on veut préparer l'hydroxyde substitué à partir de solutions car il n'existe pas de sels de cobalt (III) qui soient solubles et stables dans une solution aqueuse.

La présente invention a précisément pour objet un procédé de préparation d'un hydroxyde de nickel substitué au cobalt qui pallie l'inconvénient du procédé précité.

Selon l'invention, le procédé de préparation d'un hydroxyde de nickel substitué au cobalt de structure alpha répondant à la formule :

$$Ni_{1-x}Co_x(OH)_{2-t}, yH_2O, \left(\frac{x}{n}+\frac{t}{n}\right) A \quad (I)$$

dans laquelle A représente au moins un anion de valence n, et x, y, et t sont tels que

$$0{,}2 \leq x \leq 0{,}5$$
$$0 < y < 2{,}5$$
$$0 \leq t < 0{,}6$$

se caractérise en ce qu'il comprend une étape de précipitation d'un hydroxyde mixte de nickel et de cobalt en partant d'une solution aqueuse d'un sel de nickel (II) et d'une solution aqueuse d'un sel de cobalt (II), en présence du ou des anions A, et une étape d'oxydation du cobalt (II) en cobalt (III) dans ladite solution aqueuse ou dans le précipité formé, et une étape complémentaire de réduction lorsqu'on oxyde Co(II) en Co(III) dans le précipité formé et que l'on obtient la structure $\gamma$.

Dans ce procédé, on part ainsi d'une solution aqueuse d'un sel de nickel (II) et de cobalt (II) et on peut, soit oxyder tout d'abord le cobalt en solution et former à partir du sel de Ni(II) et du sel de Co(III) un précipité d'hydroxyde de nickel substitué conforme à l'invention, soit préparer à partir des sels de Ni(II) et de Co(II), un précipité d'hydroxyde de nickel substitué au cobalt (II) que l'on transforme ensuite en l'hydroxyde de nickel substitué au Co(III) conforme à l'invention par oxydation du cobalt (II).

Les réactifs utilisés pour la précipitation ou l'oxydation sont des réactifs classiques, et l'on peut effectuer l'ensemble des opérations à la température ambiante, ce qui facilite la mise en oeuvre du procédé à l'échelle industrielle.

Selon un premier mode de mise en oeuvre de ce procédé, on oxyde tout d'abord un sel de cobalt (II) en solution aqueuse en sel de cobalt (III)et on forme à partir de ce sel et d'un sel de nickel (II) l'hydroxyde de formule (I) conforme à l'invention. Dans ce cas, le procédé comprend les étapes successives suivantes :

1°) préparation d'une solution aqueuse d'un sel de Co(III) par oxydation d'un sel de Co(II) en solution aqueuse au moyen d'un agent oxydant avec maintien du pH à une valeur inférieure à 1,5,

2°) mélange de la solution aqueuse du sel de cobalt (III) ainsi obtenue avec un sel de nickel (II), et

3°) précipitation d'un hydroxyde mixte de nickel (II) et de cobalt (III) de formule (I) et de structure $\alpha$ par addition rapide de soude à la solution, sous agitation, de façon telle que le pH reste inférieur à 10 dans toute la solution, la solution et/ou l'atmosphère ambiante contenant le ou les anions A.

Dans ce procédé, la première étape de préparation de la solution aqueuse de sel de cobalt (III) doit être effectuée dans certaines conditions car les ions $Co^{3+}$ sont très instables en solution et se réduisent rapidement. Conformément à l'invention, on a trouvé qu'en effectuant l'oxydation en milieu acide et en controlant le pH de la solution pendant toute la durée de l'oxydation pour qu'il reste inférieur à 1,5, on pouvait obtenir une solution d'un sel de cobalt (III).

Le sel de cobalt (II) de départ peut être en particulier du nitrate de cobalt et on peut utiliser comme agent oxydant tout agent oxydant susceptible d'oxyder le cobalt (II) en cobalt (III). De préférence, on utilise un agent oxydant qui introduit peu d'impuretés dans la solution, par exemple de l'hypochlorite de sodium. En effet, étant donné que dans l'étape suivante on réalise la précipitation de l'hydroxyde de nickel substitué au moyen de soude, la présence de sodium n'introduit pas d'impuretés supplémentaires.

Dans ce procédé, l'étape de précipitation de l'hydroxyde de nickel substitué au cobalt au moyen de soude doit également être réalisée dans des conditions particulières pour éviter toute réduction des ions $Co^{3+}$. On a trouvé qu'en utilisant la solution de sel de cobalt (III) obtenue dans l'étape précédente très rapidement et en effectuant la précipitation également rapidement mais en réglant la vitesse d'addition de la soude de façon à éviter que le pH dépasse une valeur de 10 dans la solution, on pouvait obtenir l'hydroxyde de nickel substitué au cobalt de structure alpha dans de bonnes conditions. Les anions A peuvent être introduits dans cet hydroxyde, soit à partir de la solution aqueuse, soit à partir de

l'atmosphère ambiante dans le cas des ions carbonate.

De préférence, les anions A sont des anions bivalents, par exemple $CO_3^{2-}$ ou $SO_4^{2-}$. Les anions A peuvent aussi être $NO_3^-$ ou $OH^-$. Les anions A peuvent encore comprendre différents types d'anions, par exemple être constitués d'anions $OH^-$ et $CO_3^{2-}$.

Lorsque les anions A sont des ions carbonate, ceux-ci peuvent être introduits dans l'hydroxyde de nickel, soit à partir de l'air ambiant qui contient généralement du $CO_2$, soit à partir de la solution à laquelle on ajoute dans ce cas un carbonate tel que $Na_2CO_3$. Lorsque les anions A sont des ions sulfate, ceux-ci peuvent être introduits à partir de la solution de précipitation. Dans ce cas, on ajoute à la solution un sulfate, par exemple du sulfate de sodium. Lorsque les anions A sont des anions $OH^-$, ceux-ci proviennent de la solution aqueuse et il n'est pas nécessaire d'ajouter d'autres réactifs à la solution aqueuse de précipitation.

Après l'opération de précipitation, on peut maintenir encore la solution sous agitation pour favoriser l'insertion des anions A, par exemple des ions carbonate issus du $CO_2$ de l'air. On effectue ensuite des lavages pour éliminer les impuretés, par exemple les ions sodium, puis on sèche le produit qui se présente après broyage sous la forme d'une poudre fine.

Selon une variante de ce premier mode de mise en oeuvre du procédé, l'oxydation du cobalt (II) en cobalt (III) peut être faite par le peroxyde d'hydrogène. Lors de la précipitation de l'hydroxyde mixte , l'augmentation du pH provoque la formation de cobalt (III) sans oxyder le nickel. Les anions A peuvent être ajoutés lors de la précipitation ou provenir du $CO_2$ de l'air dans le cas des carbonates.

Dans ce cas, le procédé comprend les étapes successives suivantes :

1°) préparation d'une solution aqueuse d'un sel de nickel (II) et d'un sel de cobalt (II) et de peroxyde d'hydrogène,

2°) précipitation d'un hydroxyde de nickel (II) et de cobalt (III) de formule (I) et de structure $\alpha$ par addition rapide de soude à la solution sous agitation de façon que le pH reste inférieur à 10 dans toute la solution, la solution et/ou l'atmosphère ambiante contenant le ou les anions A.

Selon un second mode de mise en oeuvre du procédé de l'invention, on prépare tout d'abord un hydroxyde mixte de nickel (II) et de cobalt (II) par précipitation puis on soumet le précipité à un traitement pour oxyder le précipité sous forme $\gamma$ puis le réduire sous forme $\alpha$ contenant Ni(II) et Co(III) et insérer les anions A.

Dans ce cas, le procédé comprend les étapes successives suivantes :

1°) préparation d'une solution aqueuse contenant un sel de nickel (II) et un sel de cobalt (II),

2°) précipitation d'un hydroxyde mixte de nickel (II) et de cobalt (II) de structure $\alpha$ , et

3°) oxydation du précipité obtenu, sous forme $\gamma$ , puis réduction en présence des anions A pour obtenir l'hydroxyde de nickel substitué au cobalt trivalent de formule (I) et de structure $\alpha$.

La précipitation de l'hydroxyde mixte de Ni(II) et de Co(II) peut être effectuée par voie chimique ou par voie électrochimique.

Lorsqu'on opère par voie chimique, on peut réaliser la précipitation par addition de soude sous agitation à la solution contenant les sels de nickel (II) et de cobalt (II).

Lorsqu'on opère par voie électrochimique, on précipite électrochimiquement sur un support conducteur l'hydroxyde mixte de Ni(II) et de Co(II) de type $\alpha$ .

Selon une variante de ce second mode, on peut réaliser la deuxième étape de précipitation de l'hydroxyde mixte de nickel et de cobalt de façon à obtenir la structure de type bêta, puis transformer cette structure par oxydation sous forme $\gamma$ suivie d'une réduction en structure alpha. Dans ce cas, le procédé comprend les étapes successives suivantes :

1°) préparation d'une solution aqueuse contenant un sel de Ni (II) et un sel de cobalt (II),

2°)précipitation d'un hydroxyde mixte de Ni(II) et de Co(II) de type $\beta$(II) à partir de cette solution, et

3°) Oxydation de la phase bêta en phase $\gamma$, puis réduction en présence d'anions A. Après un tel cycle le cobalt (II) initialement présent dans la phase $\beta$ (II) est transformé en cobalt (III). On obtient ainsi l'hydroxyde mixte de nickel de formule (I) et de structure $\alpha$.

Dans ce second mode de mise en oeuvre du procédé, on peut réaliser l'oxydation du précipité en phase $\gamma$ par voie chimique, par exemple au moyen d'une solution d'hypochlorite de sodium et de potasse. La réduction peut être effectuée également par voie chimique, par exemple au moyen d'une solution de peroxyde d'hydrogène.

On peut également envisager de réaliser ces étapes d'oxydation et de réduction par voie électrochimique en utilisant le précipité comme électrode positive et en le cyclant électrochimiquement dans un électrolyte à base de KOH de façon à l'oxyder suffisamment puis le réduire pour obtenir le cobalt (III) et la structure alpha.

De préférence, on utilise cette voie électrochimique lorsque le précipité a été obtenu électrochimiquement sur un support conducteur car il est déjà sous forme d'électrode.

Selon un troisième mode de mise en oeuvre du procédé de l'invention, on prépare tout d'abord un hydroxyde mixte de nickel (II) et de cobalt (II) de structure alpha par précipitation, puis on soumet le précipité à un traitement d'oxydation sélective du cobalt (II) en cobalt (III) en présence des anions A, pour obtenir l'hydroxyde mixte de structure alpha.

Dans ce cas, le procédé comprend les étapes successives suivantes :

1°) préparation d'une solution aqueuse contenant un sel de nickel (II) et un sel de cobalt (II),

2°) précipitation d'un hydroxyde mixte de nickel (II) et de cobalt (II) de type alpha à partir de cette solution, et

3°) oxydation sélective directe du cobalt (II) en cobalt (III), en présence des anions A, sans oxydation du nickel pour obtenir l'hydroxyde de nickel substitué de formule (I) et de structure alpha.

Dans ce troisième mode de mise en oeuvre du procédé de l'invention, la précipitation de l'hydroxyde mixte de structure alpha peut être effectuée comme précédemment, soit par voie chimique, par exemple par addition de soude à la solution sous agitation, soit par voie électrochimique par précipitation électrochimique sur un support conducteur.

L'oxydation sélective directe du cobalt (II) en cobalt (III) peut être réalisée par le peroxyde d'hydrogène en milieu basique.

Dans les différents modes de mise en oeuvre du procédé de l'invention, les anions A peuvent provenir de l'atmosphère ambiante ou de la solution aqueuse. Dans ce dernier cas, on les introduit dans la solution aqueuse de précipitation comme on l'a décrit à propos du premier mode de mise en oeuvre du procédé de l'invention.

Dans les différents modes de mise en oeuvre du procédé de l'invention, on peut précipiter l'hydroxyde mixte de nickel et de cobalt sur un support conducteur de l'électricité qui sera utilisé ensuite comme support d'électrode.

Ce support peut être constitué par exemple par une grille obtenue par perforation, nettoyage, puis nickelage d'une bande d'acier.

On peut aussi utiliser comme support conducteur un feutre, un fritté ou une mousse de matériau conducteur électronique, par exemple de nickel ou d'alliage de nickel.

L'hydroxyde de nickel substitué au cobalt de structure alpha répondant à la formule :

$$Ni_{1-x}Co_x(OH)_{2-t}, yH_2O, \left(\frac{x}{n} + \frac{t}{n}\right) A \quad (I)$$

dans laquelle A représente au moins un anion de valence n, et x, y et t sont tels que

$$0,2 \leq x \leq 0,5$$
$$0 < y < 2,5$$
$$0 \leq t < 0,6$$

obtenu par le procédé de l'invention, peut être utilisé comme électrode positive dans un générateur électrochimique comportant une électrode négative, et un électrolyte comprenant une ou plusieurs bases alcalines.

Grâce à l'utilisation de cet hydroxyde de nickel substitué de formule (I), de structure $\alpha$, stable indéfiniment dans la potasse, qui est oxydé en $\gamma$ lors de la réaction électrochimique et se reforme lors de la réduction, ce générateur électrochimique a des caractéristiques améliorées car les réactions électrochimiques mettent en jeu plus d'un électron.

Dans un tel générateur, l'électrode négative peut être constituée par tout matériau susceptible de présenter un couple redox mettant en jeu des $OH^-$ ou des protons et présentant une conductivité électronique notable sous au moins une des deux formes (oxydée ou réduite).

A titre d'exemple, l'électrode négative peut être réalisée en cadmium, en fer, en zinc, ou sous forme d'un métal ou alliage donnant des hydrures métalliques, ou encore être constituée par une électrode à hydrogène.

L'électrolyte utilisé est généralement une solution d'une base alcaline telle que la potasse, la soude, la lithine ou leurs mélanges.

L'électrode positive comprend généralement un support conducteur électronique qui peut être de différentes formes. A titre d'exemple, le support peut être constitué par une boîte percée de trous, réalisée par exemple en nickel, en acier nickelé ou en tout autre matériau conducteur électronique résistant aux solutions alcalines, dans laquelle est comprimée la poudre d'hydroxyde de nickel substitué de formule (I) à laquelle on a ajouté une poudre d'un matériau conducteur électronique tel que le graphite, le nickel, etc.

Le support peut également être constitué par une plaque ou une grille en matériau conducteur électronique, et servir également de collecteur de courant. A titre d'exemple de supports de ce type, on peut citer les feutres, les frittés et les mousses de matériaux conducteurs électroniques stables en milieu basique, par exemple en nickel ou en acier nickelé. Dans ce cas, on forme directement le précipité d'hydroxyde de nickel substitué de formule (I) sur ce support conducteur qui sert de collecteur de courant.

On peut encore réaliser l'électrode positive du générateur en utilisant comme support conducteur une grille ou une mousse de matériau conducteur électronique, par exemple de nickel, sur laquelle on dépose une pâte formée d'un conducteur électronique et de l'hydroxyde de nickel substitué de formule (I) conforme à l'invention auquel peut être ajouté un liant organique ou inorganique. On dépose cette pâte sur la grille ou la mousse par enduction puis on la sèche, ce qui permet d'obtenir une électrode utilisable dans le générateur électrochimique de l'invention.

On peut encore former la pâte en ajoutant de l'eau aux particules d'hydroxyde de nickel substitué puis enduire le support conducteur avec cette pate et la sécher ensuite à la température ambiante.

Les électrodes peuvent être sous la forme de plaques. Elles peuvent également se présenter sous la forme d'enroulements.

D'autres caractéristiques et avantages de l'invention apparaîtront mieux à la lecture de la description qui suit, donnée bien entendu à titre illustratif et non limitatif en référence au dessin annexé sur lequel :

La figure 1 est une représentation schématique en perspective d'un générateur électrochimique utilisant l'hydroxyde de nickel substitué au cobalt préparé par le procédé de l'invention,

la figure 2 représente les variations de la tension en fonction du temps lors de la 10ème décharge du générateur comportant comme matériau d'électrode l'hydroxyde obtenu dans l'exemple 1,

la figure 3 illustre le nombre d'électrons échangés en fonction du nombre de cycles pour le générateur dont une courbe de décharge a été représentée à la figure 2,

la figure 4 est une représentation graphique du nombre d'électrons échangés en fonction du nombre de cycles pour un générateur comportant comme électrode positive l'hydroxyde de l'exemple 2,

la figure 5 est une représentation graphique de la tension de décharge en fonction du temps, lors d'une décharge pour un générateur comportant comme électrode positive l'hydroxyde de l'exemple 4, et

la figure 6 est une représentation graphique du nombre d'électrons échangés en fonction du nombre de cycles du générateur dont une courbe de décharge a été représentée à la figure 5.

Les exemples qui suivent illustrent la préparation d'hydroxyde de nickel substitué au cobalt de formule (I) par mise en oeuvre du procédé de l'invention.

**Exemple 1** : Préparation d'hydroxyde de nickel substitué au cobalt de formule : $Ni_{0,6}Co_{0,4}(OH)_2$, 1,1 $H_2O$, 0,2$CO_3$.

Dans cet exemple, on suit le premier mode de mise en oeuvre du procédé de l'invention.

1°) Préparation d'une solution de sel de cobalt (III).

On part d'une solution de nitrate de cobalt Co $(NO_3)_2$ à 18,26g de Co/l et on acidifie 54,8ml de cette solution, ce qui correspond à 1g de cobalt, par 130ml d'acide nitrique 1,3N. On obtient ainsi un pH voisin de 0,3.

On verse très lentement dans cette solution 55ml d'une solution oxydante de NaClO concentré (48° chlorométrique), en maintenant constamment le pH de la solution à une valeur inférieure à 1,5 par addition d'acide nitrique 1,3N, ce qui nécessite 30ml de cet acide.

On obtient ainsi une solution de nitrate de cobalt (III).

2°) Précipitation de l'hydroxyde de nickel substitué de structure $\alpha$ .

On utilise immédiatement cette solution pour précipiter l'hydroxyde de nickel substitué au cobalt car les ions $Co^{3+}$ sont très instables en solution et se réduisent rapidement en l'absence d'oxydant. On ajoute alors à cette solution, 6,71g de $NiSO_4$, 6$H_2O$ dissous dans 20ml d'eau déminéralisée, ce qui correspond à une solution contenant 1,5g de nickel. On agite ensuite fortement la solution obtenue (à 300 tours/minute) tout

en y versant rapidement une solution de NaOH 2N. Pendant cette introduction, on suit le pH et on arrête la précipitation lorsque le pH atteint la valeur de 10. En effet, la vitesse de précipitation doit impérativement être rapide pour éviter toute réduction des ions $Co^{3+}$ et on contrôle la vitesse d'addition de la soude en fonction du pH pour ne pas dépasser la valeur de 10. Lorsque le pH atteint 10, on arrête l'introduction de soude.

Le volume de soude peut varier d'une manipulation à l'autre en fonction du pH de la solution de $Ni^{2+}$ et $Co^{3+}$. Ce volume est néanmoins compris généralement entre 130 et 160ml.

Après cette réaction, on poursuit l'agitation de la solution à 250-300 tours/minute, pendant 15 heures, afin de favoriser l'insertion des ions carbonate dans le précipité, insertion qui est nécessaire pour compenser l'excès de charge apporté par les ions $Co^{3+}$.

On sépare alors le précipité de la solution par filtration, puis on le soumet à cinq lavages à l'eau déminéralisée en effectuant les séparations par décantation. On réalise ensuite deux lavages à l'acétone, puis on filtre le produit sur un büchner et on le sèche à la température ambiante.

Le produit obtenu est soumis à une analyse par rayons X et l'on constate ainsi que la phase obtenue est une phase alpha cobaltée. Ce produit n'évolue pas en milieu potassique concentré, c'est-à-dire dans l'électrolyte des batteries alcalines à électrode de nickel. Il est donc stabilisé.

**Exemple 2** : Préparation d'un hydroxyde de nickel de formule : $Ni_{0,6}Co_{0,4}(OH)_2$, $0,8H_2O$, $0,2CO_3$

Dans cet exemple, on suit le deuxième mode de mise en oeuvre du procédé de l'invention en précipitant dans la première étape un hydroxyde mixte de nickel et de cobalt de structure alpha.

Dans ce cas, on dissout 6,71g de $NiSO_4$, $6H_2O$ (soit 1,5g de nickel) dans 54,8ml d'une solution de $Co(NO_3)_2$ à 18,26g/l de cobalt (ce qui correspond à 1g de cobalt).

On verse ensuite rapidement dans cette solution 34ml de soude 2N tout en agitant la solution à 300 tours/minute environ. On précipite ainsi un hydroxyde de nickel (II) et de cobalt (II) de structure alpha et le pH en fin de précipitation reste voisin de 10. On poursuit ensuite l'agitation pendant une heure environ. On sépare alors le produit de la solution, on le lave à l'eau par décantation jusqu'à la neutralité des eaux de lavage, puis on le sèche à l'acétone et on le filtre sur büchner. On sèche ensuite à l'étuve à 70 °C.

Le précipité obtenu (5g environ) est une phase alpha contenant 0,4 cobalt en fraction molaire, mais les ions cobalt et les ions nickel sont au degré d'oxydation +2. Cette phase n'est pas stable en milieu potassique et se transforme irréversiblement en un hydroxyde de type bêta (II).

Aussi, conformément à l'invention, on traite cette phase alpha pour oxyder le cobalt. Ceci est effectué par un cyclage chimique qui consiste à réaliser successivement une oxydation en $\gamma$ puis une réduction.

Dans ce but, on traite le précipité obtenu précédemment par un mélange de 200ml de NaClO 10N et de 800ml de KOH 5N, ce qui conduit à la formation de l'oxyhydroxyde de structure gamma. On réduit ensuite cet oxyhydroxyde par de l'eau oxygénée à 11 volumes (100ml), ce qui conduit à la formation d'une phase alpha dans laquelle les ions nickel et cobalt sont respectivement au degré d'oxydation +2 et +3. Cette phase est identifiée comme dans l'exemple 1 par spectrométrie des rayons X. On constate également qu'elle est stabilisée puisqu'elle n'évolue pas en milieu potassique concentré.

**Exemple 3** : Préparation d'un hydroxyde de nickel de formule : $Ni_{0,6}Co_{0,4}(OH)_2$, $0,8H_2O$, $0,2CO_3$

Dans cet exemple, on suit le troisième mode de mise en oeuvre du procédé de l'invention en précipitant dans la première étape un hydroxyde mixte de nickel et de cobalt de structure alpha comme dans l'exemple 2.

Le cobalt de cette phase est ensuite oxydé sélectivement par du peroxyde d'hydrogène en milieu basique.

Pour cela les 5g environ de phase alpha obtenus dans la première étape sont traités par un mélange de 50ml de $H_2O_2$ à 11 volumes et de 50ml de NaOH 2N sous agitation mécanique (300 tours/minute pendant 15h). Dans ces conditions les ions $CO_3^{=}$ sont absorbés à partir du $CO_2$ atmosphérique. Cette réaction conduit à la formation d'un hydroxyde de formule (I) et de structure $\alpha$ contenant des ions Co(III). Ce matériau est stable en milieu KOH concentré.

**Exemple 4** : Préparation d'un hydroxyde de nickel de formule : $Ni_{0,75}Co_{0,25}(OH)_2$, $0,8H_2O$, $0,125CO_3$

Dans cet exemple, on utilise le deuxième mode de mise en oeuvre du procédé de l'invention mais on précipite dans la première étape un hydroxyde mixte de structure bêta.

On dissout tout d'abord 10,74g de $NiSO_4$, $6H_2O$ (ce qui correspond à 2,25g de nickel) dans 41,1ml d'une solution de $Co(NO_3)_2$ à 18,26g de cobalt par litre (ce qui correspond à environ 0,75g de cobalt).

On réalise ensuite la précipitation de l'hydroxyde de nickel et de cobalt de structure bêta par addition de 51ml de NaOH 2N.

Dans ce cas, on porte tout d'abord les 51ml de NaOH 2N, au bain-marie à une température de 80 à 100 °C, puis on verse la solution aqueuse de $NiSO_4$ et $Co(NO_3)_2$ en 20 min dans NaOH 2N.

On ajoute ensuite 110ml d'eau déminéralisée (à 80 °C) et on agite mécaniquement la solution à environ 300 tours/minute pendant une heure.

On filtre alors le produit obtenu sur un büchner après décantation, puis on le sèche à l'étuve à 120 °C pendant 15 heures. On broie ensuite la poudre, puis on la lave 4 fois environ par de l'eau jusqu'à neutralité des eaux de lavage et on la sèche à l'étuve à 30 °C pendant 8 heures.

On obtient ainsi 5g environ d'un hydroxyde de nickel et de cobalt de type bêta (II) dont la fraction molaire en ions $Co^{2+}$ est de 0,25.

On soumet alors ce précipité à un traitement pour oxyder le cobalt à l'état (III). Dans ce but, on réalise tout d'abord une oxydation du précipité par un mélange de 400ml de NaClO 10N et de 1,6 l de KOH 5N en réalisant la réaction pendant deux jours sous agitation. On obtient ainsi la variété gamma et on soumet celle-ci à une réduction par de l'eau oxygénée $H_2O_2$ à 11 volumes (100ml) pour obtenir la phase alpha stabilisée qui est identifiée comme précédemment par spectrométrie des rayons X.

On vérifie également que cette phase alpha reste stable dans un milieu potassique concentré.

## Exemple 5.

Dans cet exemple, on utilise l'hydroxyde de nickel substitué au cobalt préparé dans l'exemple 1 pour préparer l'électrode positive d'un générateur électrochimique.

Dans ce but, on mélange 300mg de la poudre d'hydroxyde de nickel substituée au cobalt de structure alpha obtenue dans l'exemple 1 avec 100mg de poudre de graphite et on mélange les deux poudres en les soumettant à un broyage. On ajoute de l'eau au mélange pour former une pâte et on dépose cette pâte sur un support conducteur électronique qui est constitué par une feuille en mousse de nickel de $4cm^2$ de surface. Après avoir déposé cette pâte sur le support, on sèche à la température ambiante, puis on comprime sous une pression de $0{,}7t/cm^2$ (70MPa).

On dispose ensuite cette électrode dans un générateur électrochimique tel que celui représenté sur la figure 1.

Sur la figure 1, on voit que ce générateur électrochimique (1) comprend un récipient (3) rempli d'électrolyte (4) à l'intérieur duquel sont disposés successivement l'électrode positive (6), un séparateur poreux (8) et une électrode négative (10), l'intervalle entre les électrodes 6 et 10 étant de 3mm.

Conformément à l'invention, l'électrode positive est constituée d'un support en mousse de nickel revêtu d'un matériau actif constitué par l'hydroxyde de nickel substitué au cobalt de structure alpha conforme à l'invention. L'électrode négative (10) peut être constituée par tout matériau susceptible de présenter un couple redox mettant en jeu des $OH^-$ ou des protons et présentant une conductivité électronique notable sous au moins une des deux formes (oxydée ou réduite). Ce matériau doit de plus être résistant à l'électrolyte (4) qui est généralement une solution fortement alcaline, par exemple une solution de potasse contenant éventuellement d'autres bases alcalines comme la lithine et la soude.

Dans cet exemple, on utilise comme électrode négative (10) une plaque de cadmium et comme électrolyte de la potasse 5N. Les électrodes (6) et (10) sont reliées à un circuit électrique extérieur permettant de réaliser la charge et la décharge du générateur (le générateur est à l'état déchargé lors de sa fabrication).

Dans cet exemple, le générateur est cyclé électrochimiquement sous un courant de 12,8mA (ce qui correspond à un régime c/5) selon le processus suivant :

a) charge 20h
b) décharge jusqu'à un seuil bas de 0,9V
c) charge 15h
d) décharge jusqu'à un seuil bas de 0,9V
e) charge 7,30h

Les processus d), e) sont ensuite répétés indéfiniment.

La figure 2 représente l'évolution du potentiel (en volts) en fonction du temps (en heures) lors de la dixième décharge.

Sur cette figure, on voit que la tension maximale est de 1,5V et que la décharge s'effectue en 5h 30min avec un potentiel de mi-décharge voisin de 1,5V.

Sur la figure 3, on a représenté pour ce générateur le nombre d'électrons échangés (e) en fonction du nombre de cycles (N).

Au vu de cette figure, on remarque que le nombre d'électrons échangés pour chaque cycle est toujours supérieur à 1, alors qu'il est généralement de 0,8 environ avec les générateurs électrochimiques comportant une électrode positive formée d'un hydroxyde de nickel de structure bêta.

**Exemple 6.**

Dans cet exemple, on utilise l'hydroxyde de nickel substitué au cobalt obtenu dans l'exemple 2 pour préparer l'électrode positive d'un générateur électrochimique. On opère dans les mêmes conditions que celles de l'exemple 5 pour préparer cette électrode positive et on l'inclut dans le même générateur électrochimique comportant une électrode de cadmium et un électrolyte à base de potasse 5N. On réalise ensuite plusieurs cycles de charge et de décharge comme dans l'exemple 5 mais avec un courant de 13,5mA (C/5).

La figure 4 illustre le nombre d'électrons échangés (e)en fonction du nombre de cycles (N).

Au vu de cette figure, on constate que le nombre d'électrons échangés par cycle est toujours supérieur ou égal à 1. On obtient donc de meilleurs résultats qu'avec les générateurs électrochimiques de l'art antérieur.

**Exemple 7.**

Dans cet exemple, on utilise l'hydroxyde de nickel substitué au cobalt obtenu dans l'exemple 4 pour préparer l'électrode d'un générateur électrochimique en opérant de la même façon que dans l'exemple 5. On utilise ensuite l'électrode dans un générateur électrochimique comportant une électrode négative en cadmium et un électrolyte à base de potasse 5N, et on réalise plusieurs cyclages électrochimiques en commençant par une charge et en effectuant le cyclage comme dans l'exemple 5 mais avec un courant de 14mA (C/5).

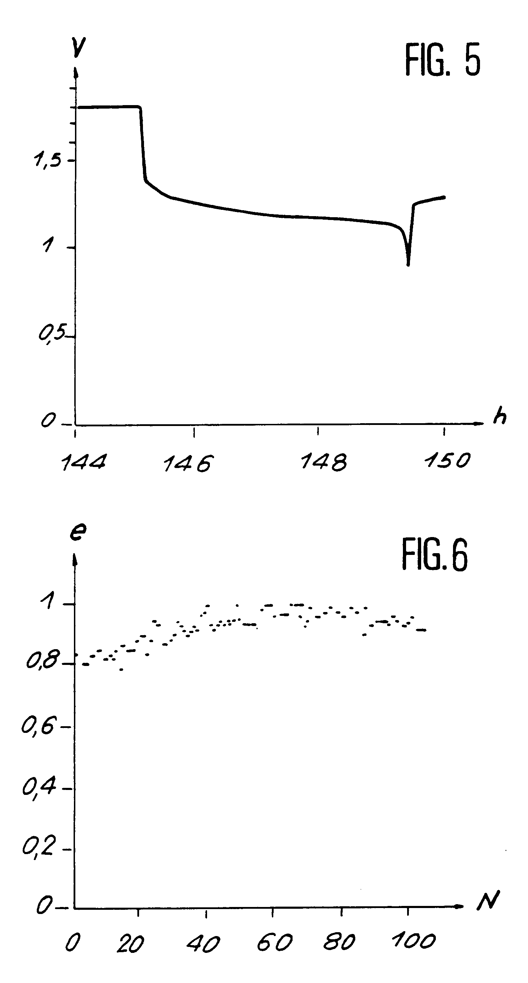

Les résultats obtenus sont donnés sur les figures 5 et 6.

La figure 5 représente les variations de la tension (en volts) en fonction du temps (en heures) lors de la dixième décharge.

Au vu de cette figure, on constate que la décharge s'effectue avec un potentiel à mi-décharge égal à 1,17V.

La figure 6 représente le nombre d'électrons échangés(e) en fonction du nombre de cycles (N).

Au vu de cette figure, on remarque que le nombre d'électrons échangés augmente au fur et à mesure des cyclages.

Dans l'hydroxyde de nickel substitué au cobalt de l'exemple 4, les particules étaient de plus grandes dimensions que dans les exemples précédents à cause de la formation intermédiaire de la phase $\beta$. On assiste donc à un phénomène d'activation électrochimique.

## Revendications

**1.** Procédé de préparation d'un hydroxyde de nickel substitué au cobalt de structure $\alpha$ répondant à la formule :

$$Ni_{1-x}Co_x(OH)_{2-t}, yH_2O, \left(\frac{x}{n} + \frac{t}{n}\right) A \quad (I)$$

dans laquelle A représente au moins un anion de valence n, et x, y et t sont tels que

$$0,2 \leq x \leq 0,5$$
$$0 < y < 2,5$$
$$0 \leq t < 0,6$$

caractérisé en ce qu'il comprend une étape de précipitation d'un hydroxyde mixte de nickel et de cobalt en partant d'une solution aqueuse d'un sel de nickel (II) et d'une solution aqueuse d'un sel de

cobalt (II), en présence du ou des anions A et une étape d'oxydation du cobalt (II) en cobalt (III) dans ladite solution aqueuse ou dans le précipité formé, et
une étape complémentaire de réduction lorsqu'on oxyde Co(II) en Co(III) dans le précipité formé et que l'on obtient la structure $\gamma$.

**2.** Procédé selon la revendication 1, caractérisé en ce qu'il comprend les étapes successives suivantes :
1°) préparation d'une solution aqueuse d'un sel de Co(III) par oxydation d'un sel de Co(II) en solution aqueuse au moyen d'un agent oxydant avec maintien du pH à une valeur inférieure à 1,5,
2°) mélange de la solution aqueuse du sel de cobalt (III) ainsi obtenue avec une solution aqueuse d'un sel de nickel (II), et
3°) précipitation d'un hydroxyde de nickel (II) et de cobalt (III) de formule (I) et de structure $\alpha$ par addition rapide de soude à la solution, sous agitation, de façon telle que le pH reste inférieur à 10 dans toute la solution, la solution et/ou l'atmosphère ambiante contenant le ou les anions A.

**3.** Procédé selon la revendication 2, caractérisé en ce que l'agent oxydant est l'hypochlorite de sodium.

**4.** Procédé selon la revendication 1, caractérisé en ce qu'il comprend les étapes successives suivantes :
1°) préparation d'une solution aqueuse d'un sel de nickel (II) et d'un sel de cobalt (II) et de peroxyde d'hydrogène,
2°) précipitation d'un hydroxyde de nickel (II) et de cobalt (III) de formule (I) et de structure $\alpha$ par addition rapide de soude à la solution sous agitation de façon que le pH reste inférieur à 10 dans toute la solution, la solution et/ou l'atmosphère ambiante contenant le ou les anions A.

**5.** Procédé selon la revendication 1, caractérisé en ce qu'il comprend les étapes successives suivantes :
1°) préparation d'une solution aqueuse contenant un sel de nickel (II) et un sel de cobalt (II),
2°) précipitation d'un hydroxyde mixte de nickel (II) et de cobalt (II) de structure $\alpha$ et
3°) oxydation du précipité obtenu sous forme $\gamma$, puis réduction en présence des anions A pour obtenir l'hydroxyde de nickel substitué au cobalt trivalent de formule (I) et de structure $\alpha$ .

**6.** Procédé selon la revendication 5, caractérisé en ce que l'on réalise la précipitation de l'hydroxyde mixte de nickel (II) et de cobalt (II) par addition de soude sous agitation.

**7.** Procédé selon la revendication 5, caractérisé en ce que l'on réalise la précipitation de l'hydroxyde mixte de nickel (II) et de cobalt (II) par voie électrochimique sur un support conducteur.

**8.** Procédé selon la revendication 1, caractérisé en ce qu'il comprend les étapes successives suivantes :
1°) préparation d'une solution aqueuse contenant un sel de Ni (II) et un sel de cobalt (II),
2°) précipitation d'un hydroxyde mixte de Ni(II) et de Co(II) de type $\beta$(II) à partir de cette solution,
3°) oxydation du précipité obtenu, sous forme $\gamma$, puis réduction en présence des anions A pour obtenir l'hydroxyde de nickel substitué au cobalt trivalent de formule (I) et de structure $\alpha$.

**9.** Procédé selon l'une quelconque des revendications 5 et 8, caractérisé en ce que l'oxydation en phase $\gamma$ est réalisée au moyen d'une solution d'hypochlorite de sodium et de potasse.

**10.** Procédé selon l'une quelconque des revendications 5 et 8, caractérisé en ce que la réduction est effectuée au moyen d'une solution de peroxyde d'hydrogène.

**11.** Procédé selon la revendication 7, caractérisé en ce que l'on réalise l'oxydation et la réduction par voie électrochimique.

**12.** Procédé selon la revendication 1, caractérisé en ce qu'il comprend les étapes successives suivantes :
1°) préparation d'une solution aqueuse contenant un sel de nickel (II) et un sel de cobalt (II),
2°) précipitation d'un hydroxyde mixte de nickel (II) et de cobalt (III) de type alpha à partir de cette solution, et
3°) oxydation sélective directe du cobalt (II) en cobalt (III), en présence des anions A, pour obtenir l'hydroxyde de nickel substitué de formule (I) de structure alpha.

13. Procédé selon la revendication 12, caractérisé en ce que l'on réalise la précipitation de l'hydroxyde mixte de nickel (II) et de cobalt (II) par addition de soude sous agitation.

14. Procédé selon la revendication 12, caractérisé en ce que l'on réalise la précipitation de l'hydroxyde mixte de nickel (II) et de cobalt (II)par voie électrochimique sur un support conducteur.

15. Procédé selon l'une quelconque des revendications 12 à 14, caractérisé en ce que l'oxydation sélective du cobalt est effectuée au moyen d'une solution de peroxyde d'hydrogène en milieu basique.

16. Procédé selon l'une quelconque des revendications 1 à 15, caractérisé en ce que A représente au moins un anion choisi parmi $CO_3^{2-}$, $SO_4^{2-}$, $NO_3^-$ et $OH^-$.

17. Procédé selon la revendication 16, caractérisé en ce que A est $CO_3^{2-}$ et en ce que l'on réalise les étapes de précipitation et/ou les étapes d'oxydation-réduction en présence d'air contenant du $CO_2$.

## Claims

1. Process for the preparation of a cobalt-substituted nickel hydroxide of a structure corresponding to the formula

$$Ni_{1-x}Co_x\ (OH)_{2-t}, yH_2O, \left(\frac{x}{n} + \frac{t}{n}\right)\ A \qquad (I)$$

in which A represents at least one anion of valency n, and x, y and t are such that

$$0.2 \leq x \leq 0.5$$
$$0 < y < 2.5$$
$$0 \leq t < 0.6$$

characterised in that it comprises a step for the precipitation of a mixed nickel and cobalt hydroxide from an aqueous solution of a nickel (II) salt and an aqueous solution of a cobalt (II) salt, in the presence of the anion or anions A, and a step for the oxidation of the cobalt (II) into cobalt (III) in the said aqueous solution or in the precipitate formed and
a complementary reduction step when Co(II) is oxidised into Co(III) in the precipitate formed and the structure $\gamma$ is obtained.

2. Process according to claim 1, characterised in that it comprises the following successive steps:
   1°) preparation of an aqueous solution of a cobalt (III) salt by oxidation of a cobalt (II) salt in aqueous solution by means of an oxidising agent, maintaining the pH at a value below 1.5,
   2°) mixing the aqueous solution of the cobalt (III) salt thus obtained with an aqueous solution of a nickel (II) salt, and
   3°) precipitation of a nickel (II) and cobalt (III) hydroxide of formula (I) and a structure by rapid addition of sodium hydroxide to the solution with stirring, in such a way that the pH remains below 10 throughout the solution, the solution and/or the ambient atmosphere containing the anion or anions A.

3. Process according to claim 2, characterised in that the oxidising agent is sodium hypochlorite.

4. Process according to claim 1, characterised in that it comprises the following successive steps:
   1°) preparation of an aqueous solution of a nickel (II) salt and a cobalt (II) salt and hydrogen peroxide,
   2°) precipitation of a nickel (II) and cobalt (III) hydroxide of formula (I) and of a structure by rapid addition of sodium hydroxide to the solution with stirring, in such a way that the pH remains below 10 throughout the solution, the solution and/or the ambient atmosphere containing the anion or anions A.

**5.** Process according to claim 1 characterised in that it comprises the following successive steps:
1°) preparation of an aqueous solution containing a nickel (II) salt and a cobalt (II) salt,
2°) precipitation of a mixed nickel (II) and cobalt (II) hydroxide of a structure
and
3°) oxidation of the precipitate obtained into $\gamma$ form, then reduction in the presence of anions A in order to obtain trivalent cobalt-substituted nickel hydroxide of formula (I) and $\alpha$ structure.

**6.** Process according to claim 5, characterised in that the precipitation of the mixed nickel (II) and cobalt (II) hydroxide is effected by addition of sodium hydroxide with stirring.

**7.** Process according to claim 5, characterised in that the precipitation of the mixed nickel (II) and cobalt (II) hydroxide is effected by electrochemical means on a conducting support.

**8.** Process according to claim 1, characterised in that it comprises the following successive steps:
1°) preparation of an aqueous solution containing a Ni(II) salt and a cobalt (II) salt,
2°) precipitation of a mixed Ni(II) and Co(II) hydroxide of $\beta$(II) type from this solution,
3°) oxidation of the precipitate obtained, into $\gamma$ form, then reduction in the presence of anions A in order to obtain trivalent cobalt-substituted nickel hydroxide of formula (I) and a structure.

**9.** Process according to either of claims 5 and 8, characterised in that the oxidation into $\gamma$ phase is effected by means of a solution of sodium hypochlorite and potassium hydroxide.

**10.** Process according to either of claims 5 and 8, characterised in that the reduction is effected by means of a hydrogen peroxide solution.

**11.** Process according to claim 7, characterised in that the oxidation and the reduction are effected by electrochemical means.

**12.** Process according to claim 1, characterised in that it comprises the following successive steps:
1°) preparation of an aqueous solution containing a nickel (II) salt and a cobalt (II) salt,
2°) precipitation of a mixed nickel (II) and cobalt (II) hydroxide of alpha type from this solution, and
3°) direct selective oxidation of the cobalt (II) into cobalt (III) in the presence of anions A in order to obtain the substituted nickel hydroxide of formula (I) and of alpha structure.

**13.** Process according to claim 12, characterised in that the precipitation of the mixed nickel (II) and cobalt (II) hydroxide is effected by addition of sodium hydroxide with stirring.

**14.** Process according to claim 12, characterised in that the precipitation of the mixed nickel (II) and cobalt (II) hydroxide is effected by electrochemical means on a conducting support.

**15.** Process according to any of claims 12 to 14, characterised in that the selective oxidation of the cobalt is effected by means of a hydrogen peroxide solution in a basic medium.

**16.** Process according to any of claims 1 to 15, characterised in that A represents at least one anion selected from $CO_3^{2-}$, $SO_4^{2-}$, $NO_3^-$ and $OH^-$.

**17.** Process according to claim 16, characterised in that A is $CO_3^{2-}$ and in that the precipitation steps and/or the oxidation-reduction steps are effected in the presence of air containing $CO_2$.

## Patentansprüche

**1.** Verfahren zum Herstellen eines mit Cobalt substituierten Nickelhydroxids mit $\alpha$-Struktur gemäß der Formel:

$$Ni_{1-x}Co_x(OH)_{2-t},yH_2O,\left(\frac{x}{n}+\frac{t}{n}\right) A \quad (I)$$

worin A mindestens ein Anion der Wertigkeit n darstellt, und für x, y und t gilt:

$$0{,}2 \leq x \leq 0{,}5$$
$$0 < y < 2{,}5$$
$$0 \leq t \leq 0{,}6$$

**dadurch gekennzeichnet**, daß es umfaßt: einen Schritt der Ausfällung eines gemischten Hydroxids von Nickel und Cobalt ausgehend von einer wäßrigen Lösung eines Nickel(II)-salzes und einer wäßrigen Lösung eines Cobalt(II)salzes in Gegenwart von einem Anion oder Anionen A und einen Schritt der Oxidation von Cobalt(II) zu Cobalt(III) in der wäßrigen Lösung oder in dem gebildeten Niederschlag, und einen ergänzenden Reduktionsschritt, wenn Co(II) zu Co(III) in dem gebildeten Niederschlag oxidiert wird, und die γ-Struktur erhalten wird.

**2.** Verfahren nach Anspruch 1, **dadurch gekennzeichnet**, daß es die nachstehenden aufeinanderfolgenden Schritte umfaßt:
1. Herstellen einer wäßrigen Lösung eines Salzes von Cobalt(III) durch Oxidation eines Salzes von Cobalt(II) in wäßriger Lösung mit einem Oxidationsmittel, wobei der pH auf einen Wert unterhalb von 1,5 gehalten wird,
2. Vermischen der so erhaltenen wäßrigen Lösung des Cobalt(III)-salzes mit einer wäßrigen Lösung eines Nickel(II)-salzes, und
3. Ausfällung eines Hydroxids von Nickel(II) und von Cobalt(III) mit der Formel (I) und α-Struktur durch rasche Zugabe von Natriumhydroxid bzw. Soda (soude) zu der Lösung unter Rühren, so daß der pH in der gesamten Lösung unterhalb von 10 bleibt, wobei die Lösung und/oder die Umgebungsatmosphäre das oder die Anionen A enthält.

**3.** Verfahren nach Anspruch 2, **dadurch gekennzeichnet**, daß das Oxidationsmittel Natriumhypochlorit ist.

**4.** Verfahren nach Anspruch 1, **dadurch gekennzeichnet**, daß es die nachstehenden aufeinanderfolgenden Schritte umfaßt:
1. Herstellen einer wäßrigen Lösung eines Salzes von Nickel(II) und eines Salzes von Cobalt(II) und von Wasserstoffperoxid,
2. Ausfällung eines Hydroxids von Nickel (II) und von Cobalt(III) mit der Formel (I) und α-Struktur durch rasche Zugabe von Natriumhydroxid bzw. Soda zu der Lösung unter Rühren derart, daß der pH in der gesamten Lösung unterhalb von 10 bleibt, wobei die Lösung und/oder die Umgebungsatmosphäre das oder die Anionen A enthält.

**5.** Verfahren nach Anspruch 1, **dadurch gekennzeichnet**, daß es die nachstehenden aufeinanderfolgenden Schritte umfaßt:
1. Herstellen einer wäßrigen Lösung, enthaltend ein Salz von Nickel(II) und ein Salz von Cobalt(II),
2. Ausfällung eines gemischten Hydroxids von Nickel (II) und von Cobalt(II) mit α-Struktur und
3. Oxidation des erhaltenen Niederschlags, in γ-Form, anschließend Reduktion in Gegenwart von Anionen A, um das mit dreiwertigem Cobalt substituierte Nickelhydroxid mit der Formel (I) und α-Struktur zu erhalten.

**6.** Verfahren nach Anspruch 5, **dadurch gekennzeichnet**, daß die Ausfällung des gemischten Hydroxids von Nickel (II) und von Cobalt(II) durch Zugabe von Natriumhydroxid bzw. Soda unter Rühren erfolgt.

**7.** Verfahren nach Anspruch 5, **dadurch gekennzeichnet**, daß die Ausfällung des gemischten Hydroxids von Nickel (II) und von Cobalt(II) elektrochemisch auf einem leitenden Träger durchgeführt wird.

**8.** Verfahren nach Anspruch 1, **dadurch gekennzeichnet**, daß es die nachstehenden aufeinanderfolgenden Schritte umfaßt:
   1. Herstellen einer wäßrigen Lösung, enthaltend ein Salz von Nickel (II) und ein Salz von Cobalt(II)
   2. Ausfällung eines gemischten Hydroxids von Nickel (II) und von Cobalt(II) vom $\beta$(II)-Typ ausgehend von dieser Lösung,
   3. Oxidation des erhaltenen Niederschlags,in $\gamma$-Form, anschließend Reduktion in Gegenwart von Anionen A, um das mit dreiwertigem Cobalt substituierte Nickelhydroxid mit der Formel (I) und $\alpha$-Struktur zu erhalten.

**9.** Verfahren nach einem der Ansprüche 5 und 8, **dadurch gekennzeichnet**, daß die Oxidation in $\gamma$-Phase mit einer Lösung von Natriumhypochlorit und Kaliumhydroxid (potasse) durchgeführt wird.

**10.** Verfahren nach einem der Ansprüche 5 und 8, **dadurch gekennzeichnet**, daß die Reduktion mit einer Wasserstoffperoxidlösung durchgeführt wird.

**11.** Verfahren nach Anspruch 7, **dadurch gekennzeichnet**, daß die Oxidation und die Reduktion elektrochemisch durchgeführt wird.

**12.** Verfahren nach Anspruch 1, **dadurch gekennzeichnet**, daß es die nachstehenden aufeinanderfolgenden Schritte umfaßt:
   1. Herstellen einer wäßrigen Lösung, enthaltend ein Salz von Nickel(II) und ein Salz von Cobalt (II),
   2. Ausfällung eines gemischen Hydroxids von Nickel (II) und von Cobalt(II) vom $\alpha$-Typ, ausgehend von dieser Lösung, und
   3. selektive direkte Oxidation von Cobalt(II) zu Cobalt(III) in Gegenwart von Anionen A, um das substituierte Nickelhydroxid der Formel (I) mit $\alpha$-Struktur zu erhalten.

**13.** Verfahren nach Anspruch 12, **dadurch gekennzeichnet**, daß die Ausfällung des gemischen Hydroxids von Nickel (II) und von Cobalt(II) durch Zugabe von Natriumhydroxid bzw. Soda unter Rühren erfolgt.

**14.** Verfahren nach Anspruch 12, **dadurch gekennzeichnet**, daß die Ausfällung des gemischen Hydroxids von Nickel (II) und von Cobalt(II) elektrochemisch auf einem leitenden Träger durchgeführt wird.

**15.** Verfahren nach einem der Ansprüche 12 bis 14, **dadurch gekennzeichnet**, daß die selektive Oxidation des Cobalts mit einer Wasserstoffperoxidlösung in basischer Umgebung durchgeführt wird.

**16.** Verfahren nach einem der Ansprüche 1 bis 15, **dadurch gekennzeichnet**, daß A mindestens ein Anion, gewählt aus $CO_3^{2-}$, $SO_4^{2-}$, $NO_3^-$ und $OH^-$, darstellt.

**17.** Verfahren nach Anspruch 16, **dadurch gekennzeichnet**, daß A $CO_3^{2-}$ ist, und daß die Schritte der Ausfällung und/oder die Oxidations-Reduktions-Schritte in Gegenwart von Luft, welche $CO_2$ enthält, durchgeführt werden.

FIG. 1

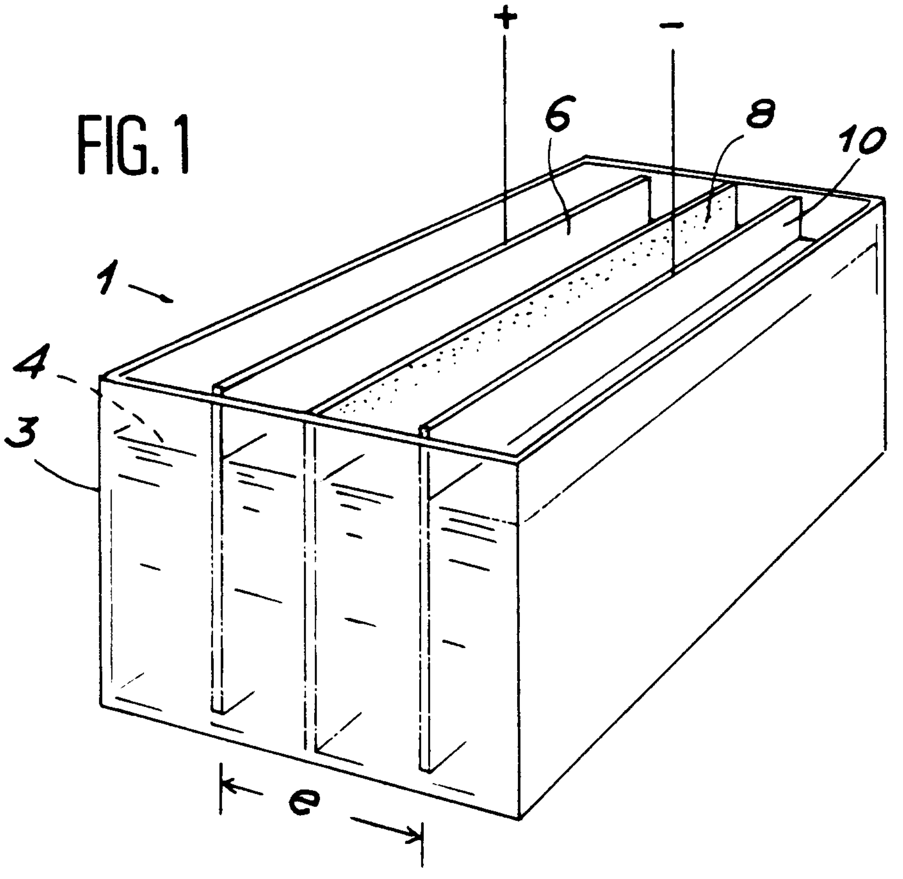


FIG. 2

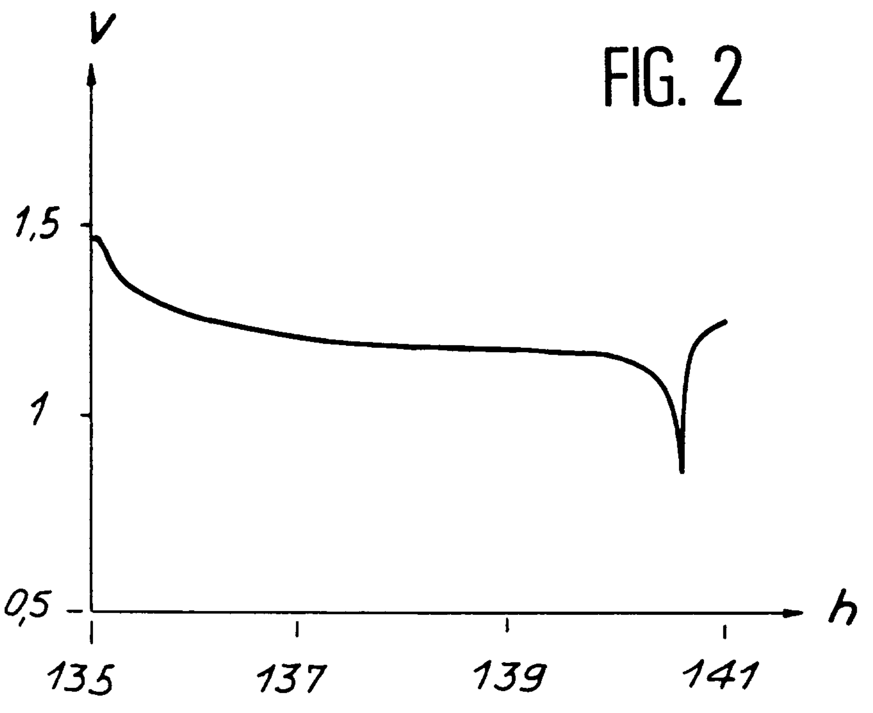

FIG. 3

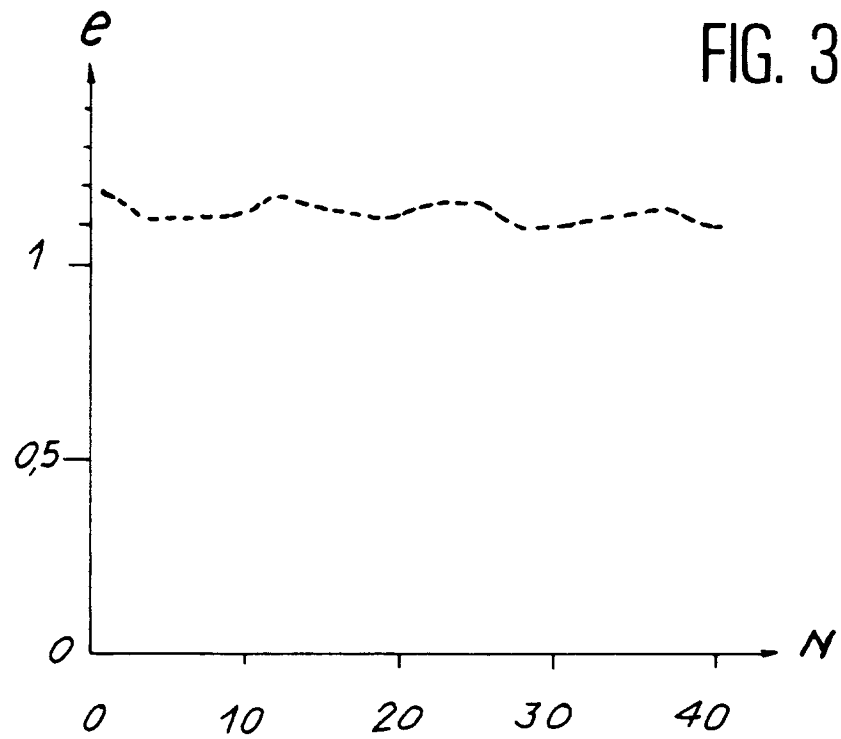


FIG. 4

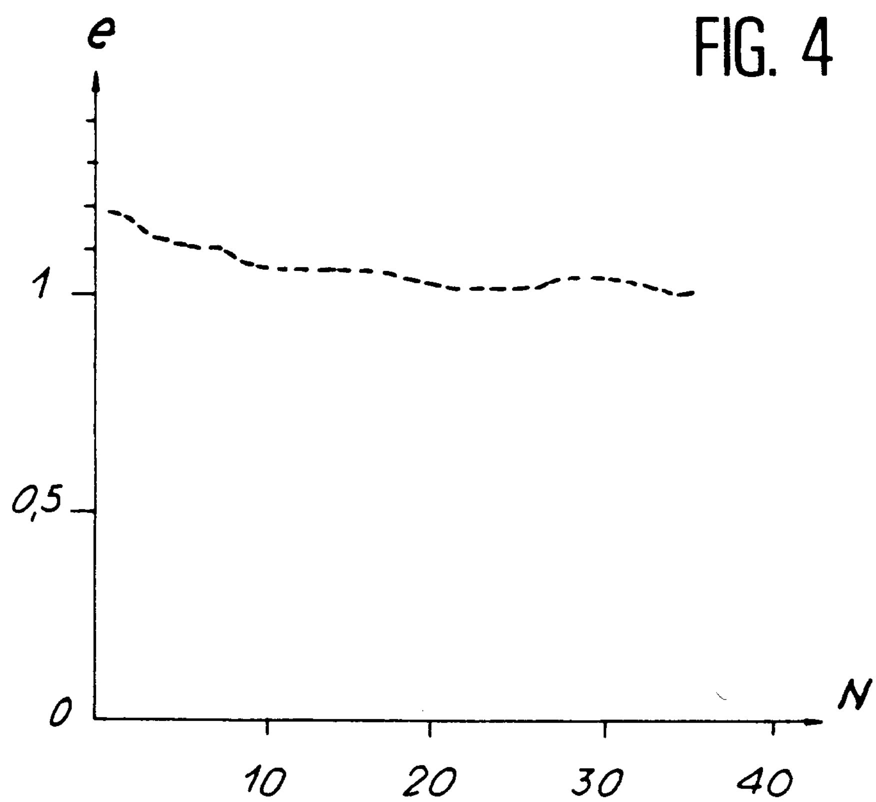

FIG. 5

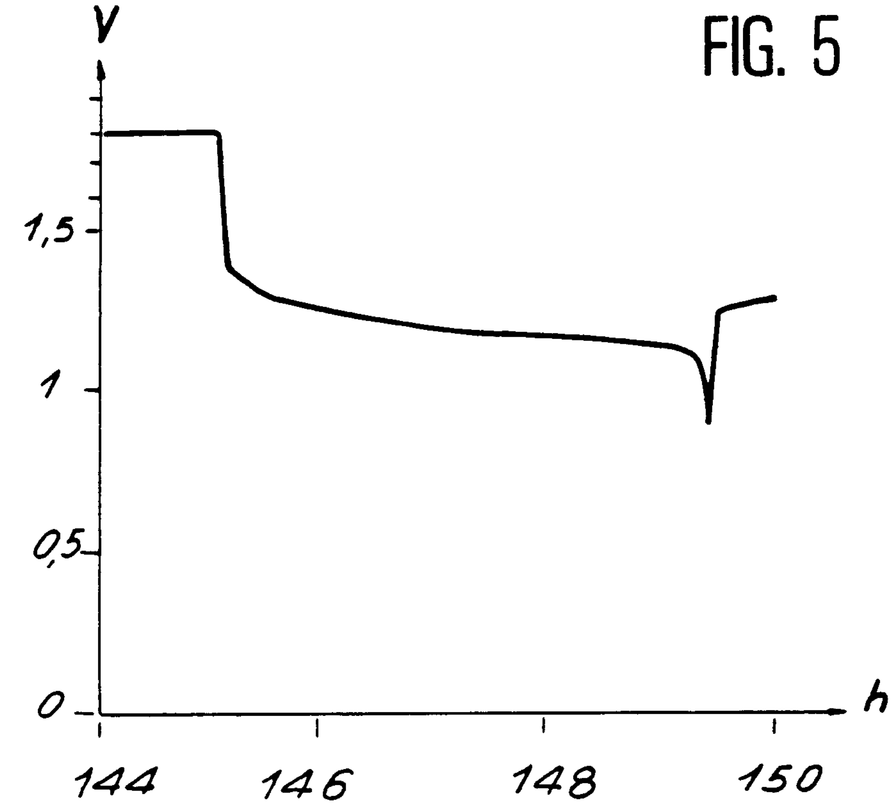


FIG.6